# EUROPEAN PATENT APPLICATION

(11) **EP 1 504 671 A1**
(43) Date of publication of application: **09.02.2005**
(21) Application number: 03017225.8
(22) Date of filing: 30.07.2003
(51) Int. Cl.: A23F 5/24, A23L 2/39, B65D 81/00

(54) **Controlled delivery of caffeine from high-caffeinated coffee beverages made from soluble powder**

(71) Applicant: NESTEC S.A., 1800 Vevey (CH)
(72) Inventor: Milon, Hubert, 1053 Cugy (CH); Rosse, Marcel, 2026 Sauges (CH)

(57) **Abstract**

A controlled caffeine delivery system in a single serving sachet made of a rupturable material, characterized in that the sachet provides a high-caffeinated soluble coffee beverage powder. This beverage powder comprises (a) conventional caffeine-containing coffee solids, and (b) additional caffeine containing solids from a natural source other than (a) in an amount sufficient to improve palatability if a beverage prepared by adding water to the powder. Thus, a beverage can be prepared that contains at least 80 to no more than 115 mg caffeine such that consumption of a single serving of the beverage by a person provides a plasma caffeine level in the person that is above 1.25 mg/l for at least 2 to 4 hours following consumption of the beverage.

## Description

### Field of the Invention

The present invention relates to a serving of a high-caffeinated soluble coffee beverage powder that can be used to provide a controlled delivery of caffeine to a person. Consumption of a beverage prepared from this single serving soluble coffee beverage powder provides a desirable and controlled plasma caffeine level for a useful period following consumption. Furthermore, in contrast to other beverages having a high content of caffeine, the beverage prepared according to the invention has a more preferred taste that is both palatable and acceptable, i.e., it has a low level of harshness and bitterness.

### Background of the Invention

Caffeine is a well-known stimulant which has an energy effect and which in addition is known to provide mental stimulation. It is traditionally accepted that caffeine containing beverages are useful for providing mental alertness to people that consume such beverages.

Caffeine containing soft drinks are well known, e.g., CocaCola™ and PepsiCola™. These beverages have a relatively low level of caffeine of about 12 mg caffeine per 100 ml, and are primarily consumed to quench thirst. During the past few years, the so-called energy beverages have emerged on the market. A commercially available energy drink is Red Bull™, and it includes about 34 mg of caffeine per 100 ml. Although such beverages may contain higher amounts of caffeine, the energy effect is relatively limited and short lasting. Also, some of these energy drinks contain caffeine that does not originate from a natural source and are not desirable for that reason.

A typical beverage of the type considered to be a suitable provider of caffeine is coffee. In addition to providing caffeine stimulation, such beverages often contain sugar or other sweeteners, whiteners, flavors, or other additives to enhance taste. These additives also provide energy to the consumer of the beverage. Conventional instant beverages such as instant coffee are not suitable for providing high caffeine servings. A standard cup of coffee prepared from soluble coffee powder contains only about 61 mg of caffeine per 100 ml beverage. In order to provide a beverage with a relatively high level of caffeine, so much soluble coffee must be used that the final beverage becomes too strong and harsh in flavor. Even the addition of whiteners and sweeteners cannot overcome this problem. To obtain the a higher level of stimulation with higher amounts of caffeine with soluble coffee in a beverage that is palatable, the consumer is therefore required to drink several cups of coffee sequentially.

Certain beverages are perceived as being higher in caffeine. These include the strong espresso type coffee beverages. There are also decaffeinated coffees that are available when people wish to avoid caffeine. These beverages do contain some caffeine, but at a much lower level that conventional caffeinated coffees. Due to the number of different coffee beverages that are available, the amount of caffeine in coffee products can vary widely, and the consumer is never sure how much he or she is ingesting. In addition, the size of the beverage plays a part in how much caffeine is present in the serving. Different levels of caffeine can be achieved by consuming multiple cups of coffee in succession, or by adding increased amounts of soluble coffee when making such beverages, but there is no way for the consumer to know for sure how much caffeine that they are consuming. In addition, the incorporation of greater amounts of soluble coffee powder in a standard size single serving drink may detrimentally affects the taste of the beverage.

US patent 4,946,701 discloses a beverage containing a flavourant and green tea solids or flavanols. Caffeine can also be present in the beverage in ratio of caffeine to flavanols of from about 1:1 to about 1:30. The preferred green tea solids are catechin and epicatechin and their derivatives. When caffeine is present, this beverage retains the alertness benefit of caffeine along with the relaxing effects attributed to the green tea solids. This beverage can also contain sweeteners.

While people can approximate the amount of caffeine to be ingested by selecting certain sizes and types of beverages, there is no precise way to determine exactly how much is being consumed. While certain levels of caffeine are helpful for providing mental alertness, too large of an amount may lead to temporary problems, such as shaking, upset stomach or other minor ailments. For avoiding these problems, it would be helpful for the consumer to be able to accurately determine how much caffeine to consume. Such knowledge would also be helpful in allowing the person to consume an amount that provides optimum mental alertness.

There is therefore a need for an instant beverage which remedies the deficiencies mentioned. More particular there is a need for a need for a single serving instant beverage having a high content of caffeine. Also, it would be desirable for the caffeine to be present in the beverage from a natural source. Further there is a need for a soluble beverage which when reconstituted and consumed which provides a controlled amount of coffee and a long lasting effect of caffeine after consumption. It is also necessary that these beverages have a good and acceptable taste that is not too harsh or bitter. The present invention now provides such beverages.

### Summary of the Invention

The invention relates to a controlled caffeine delivery system in a single serving sachet made of a rupturable material, characterized in that the sachet provides a high-caffeinated soluble coffee beverage powder. This beverage powder comprises:
(a) conventional caffeine-containing coffee solids, and
(b) additional caffeine containing solids from a natural source other than (a) in an amount sufficient to improve palatability if a beverage prepared by adding water to the powder. Thus, a beverage can be prepared that contains at least 80 to no more than 115 mg caffeine such that consumption of a single serving of the beverage by a person provides a plasma caffeine level in the person that is above 1.25 mg/l for at least 2 to 4 hours following consumption of the beverage. Preferably, the beverage contains 80 to 110 mg caffeine, and more preferably 85 to 100 mg caffeine.

Generally, the sachet is sized to provide a single serving. Thus, the sachet typically contains between 5 and 30 mg of powder. To obtain a single serving of a beverage that has an acceptable taste, the sachet contents are mixed with between 150 and 250 ml water. The powder preferably comprises from about 10% to about 50% by weight of conventional coffee solids and about 0.01 to about 10% by weight of one or more additional caffeine containing solids from a natural source other than conventional coffee solids. The additional caffeine containing solids are preferably tea extracts, guarana extracts, decaffeinated tea extracts or decaffeinated coffee extracts.

If desired, one or more flavanols can be included, with the flavanols and caffeine being present in a weight ratio of 1:0.02 to 1:1. The powder may also contain one or more of aromas, flavors, vitamins, minerals or other additives. In particular, a vitamin premix is included to provide further energy to the consumer of the prepared beverage. Other desirable additives include one or more of a sweetener, a whitener, or other extracts as desired for the consumer's taste preference.

The powder ingredients are generally present in a homogeneously mixed condition in one single serving sachet. Alternatively, the single serving may be packaged in multiple sachets that each contains a portion of the serving with each sachet containing a known amount of caffeine. The multiple sachets may be packaged in a larger container for sequential formation of beverages over time. Also, the beverage is typically prepared by the addition of 150 to 250 ml of a liquid to the powder. Preferred liquids include water or milk.

The invention also relates to the use of a sachet according to the invention to deliver a controlled amount of caffeine to a person in need of or desirous of receiving same by forming a beverage from the contents of the sachet and a liquid, followed by consumption of the liquid by the person.

The invention also relates to the use of a sachet according to the invention to prepare a beverage that can deliver a controlled amount of caffeine to a person in need of or desirous of receiving same. Here the person obtains the caffeine amounts by consuming the beverage that is prepared by mixing the contents of the sachet and a liquid.

### Detailed Description of the Preferred Embodiments

The term "consumer" is used herein to mean a person who consumes or drinks a beverage prepared by mixing a fluid with one of the powder compositions of the invention.

The present invention provides a serving of a high-caffeinated soluble coffee beverage powder having a long-lasting effect after consumption. It has been found that a combination of coffee solids and one or more additional caffeine containing solids from a natural source. Such a coffee beverage powder when reconstituted has impact on the plasma level of caffeine after consumption. Thus, the plasma caffeine level is normally above 1.25 mg/l for more than 2 hours such as, e.g., at least 2.5 hours, at least 3 hours, at least 3.5 hours or even at least 4 hours. The plasma caffeine level is measured in humans after consumption of a beverage prepared with a serving of the soluble coffee powder.

A high-caffeine content in the beverage can be obtained by the mere addition of caffeine in the form of a substantially pure caffeine powder. However, it has been found that that this generally result in a product with an unacceptable taste due to the bitter taste of caffeine itself. The present invention therefore takes advantage of a fine-tuned balance between coffee solids and other caffeine containing solids from natural sources. This balance enables a product that has an acceptable and smooth taste when consumed in the form of a beverage prepared with a serving of the soluble coffee beverage powder. In other words it tastes like coffee but is without unacceptably high bitterness. Furthermore, the beverage may be and often is preferably sweet and/or slightly milky depending upon the other ingredients that are present in the serving. The acceptability of the taste may be assessed by methods well known to a person skilled in the art e.g. by evaluation of a professional test panel. While additional sweeteners and/or whiteners can be added separately if necessary, the invention does include sufficient ingredients to form, when desired, a sweetened, whitened beverage having good organoleptic properties.

The conventional caffeine-containing coffee solids are present in an amount of from about 10% to about 50%, and preferably 10% to 30% by weight. Coffee beans from different varieties or sorts of coffee plants or mixtures thereof may be used to obtain the coffee solids.

For the preparation of the single serving powder, conveniently powdered coffee solids are used originating from coffee liquor. The coffee liquor may be obtained using any suitable procedure. Usually, the coffee liquor is prepared by concentrating a coffee extract obtained from a coffee extraction process to the desired coffee concentration. The coffee extract may be produced in the usual manner by subjecting roasted coffee beans to extraction. Any suitable extraction procedure may be used because the choice and design of the extraction procedure is a matter of preference and has no critical impact a serving of the invention. Suitable extraction procedures are described in European patent applications 0 826 308 and 0 916 267 (US Patents 5,897,903 and 5,997,929), the disclosure of each of which is expressly incorporated herein by reference thereto. Similarly, any suitable concentration procedure may be used because the choice and design of the concentration procedure is a matter of preference and has no impact on a serving of the invention. Of course, the coffee liquor may also be prepared by dissolving soluble coffee powder in water to the desired concentration.

For the production of soluble coffee, merely processing the roasted coffee beans to a coffee base concentrate as described above will result in the loss of substantially all coffee aroma. Therefore, it is preferred to specifically strip off and then collect the coffee aroma during processing. In this way, the coffee aroma is not lost. Processes for stripping off and collecting the coffee aroma are well known. Usually coffee aroma is stripped off at one or more stages, for example using an inert gas or steam during, or immediately after, grinding of the coffee beans and using steam to strip coffee aroma from the coffee extract during extraction.

Alternatively, the fresh coffee grounds may be slurried in water or coffee extract and the coffee aroma stripped from the slurry. A suitable procedure is described in International patent application WO99/52378 (US patent 6,149,957), the disclosure of each of which is expressly incorporated herein by reference thereto.

The coffee aroma may be captured using any suitable procedure. Ordinarily, the coffee aroma is captured by condensing it from the carrier gas in one or more condensers. Preferably, more than one condenser is used; each succeeding condenser being operated at a lower temperature than the previous condenser. If necessary or desired, one of the condensers may be a cryogenic aroma condenser. A suitable cryogenic aroma condenser is described in US patent 5,182,926; the disclosure of which is expressly incorporated herein by reference thereto. The captured coffee aroma may, if desired, be concentrated using a suitable technique such as partial condensation or rectification. The captured coffee aroma may be combined with a suitable carrier substrate such as coffee oil or emulsion containing coffee oil or other fats. Aqueous coffee aroma components and organic coffee aroma components are then separated. A suitable method for separating aqueous coffee aroma components is described in International patent application WO00/44238; the disclosure of which is expressly incorporated herein by reference thereto.

The processes for the production of the coffee extract and capture of the coffee aroma may be carried out under oxygen reduced or oxygen free conditions if desired. This may be accomplished as is known in the art, for example by carrying out the processes under a blanket of inert gas. Further, deoxygenated water may be used whenever water is necessary in the process.

The coffee aroma is preferably stored under oxygen reduced or oxygen free conditions and frozen. Similarly, the coffee base concentrate may be stored under oxygen reduced or oxygen free conditions. Further, if desired, oxygen scavengers may be added to the coffee aroma and/or coffee base concentrate. Suitable oxygen scavengers are described in European patent application 0 934 702 (US patent 6,093,436); the disclosure of each of which is hereby incorporated by reference.

The additional caffeine containing solids are present in an amount of from about 0.1% to about 10%, and preferably about 1% to 5% by weight. The most preferred additional caffeine containing solids are those obtained from a natural source. This includes decaffeinated coffee solids and decaffeinated tea extracts. Guarana extracts can also be used if desired. The function of these solids is to provide a suitable taste balance together with any other ingredients in the serving. Although the solids are decaffeinated, they still contain some caffeine, and this adds to the overall amount desired in the serving. These solids are necessary to provide a balance of the taste profile of the product.

A serving according to the invention may be presented in the form of a black soluble coffee beverage powder or it may be presented in a form of a powder that upon reconstitution with water provides a coffee beverage with a creamy mouth feel. The powder of the invention is conveniently provided in a single serving sachet. In one embodiment, only the caffeine containing components are present in the sachet.

Normally, a serving has a total weight of from about 5 g to about 30 g such as, e.g., from about 10 g to about 25 g or preferably from about 15 to about 20 g and the total content of caffeine from the coffee solids and the caffeine containing solids from a natural source is at least 80 to 110 mg and preferably 90 to 100mg. The serving is easily reconstituted by addition of a suitable amount of a suitable liquid such as, e.g., hot or cold water or milk. Due to the long-lasting effect of caffeine, a serving according to the invention leads to a long-lasting stimulation by providing the previously mentioned caffeine levels.

The amount of liquid utilized to form the beverage can vary over a wide range. Generally, between 150 and 250 ml of fluid, e.g., water is sufficient. The water should be heated to a temperature that is according for the consumer's preference. The minimum temperature is one that facilitates dissolution of the powder and formation of a beverage at the consumer's desired temperature. While water is the most preferred liquid, other liquids, such as milk or milk products, or aqueous solutions that contain sweeteners or flavors can instead be used, depending upon the final composition of the desired beverage. For example, an aqueous solution of a sweetener can be used when a black coffee beverage is to be reconstituted. Similarly, the use of an aqueous solution of whole milk and a sweetener would obviate the need to use the powdered sweetener and whitener, and would allow the consumer to whiten and sweeten the beverage to their desired taste.

The minimum amount of liquid to be used is that which will dissolve all desired components at least at room temperature, and while there is no theoretical maximum amount, no more fluid should be added than can be consumed within a reasonable time. As a practical limit, a maximum amount would be 350 to 500 ml.

A serving according to the invention may also contain a coffee whitener. A coffee whitener is, e.g., a dairy or non-dairy soluble creamer or whitener powder effective to produce whitened coffee. The soluble whitener powder may be any suitable whitener powder such as, e.g., a mixture made up of non-fat milk solids, sweet whey or lactose, and the lipid component in selected proportions to obtain a solution of desired fat and solids content. Conventional creamer powders contain protein, fats and sweeteners but other ingredients such as emulsifiers, stabilizers and buffers may also be included. The whiteners may be gasified to provide a foaming beverage. These creamer powders are typically produced by subjecting a solution containing their components to spray drying. In an embodiment of the invention coffee creamers are whole milk or skimmed milk, natural or reconstituted from powder; milk derivatives, a cream or coffee whitening agent comprising for instance lactic proteins, lactose and where appropriate vegetable fat.

The amount of the whitener in the serving is preferably from about 10% to about 35% and preferably 15 to 25% by weight. The whitener is effective to mask excess bitterness in the beverage and provide a more preferred taste.

The serving of a high-caffeinated soluble coffee beverage powder may also include a soluble natural or artificial sweetener. This enables the powder to be reconstituted only with water rather than with a sweetened aqueous solution. As used herein, the term "sweetener" is a material which provides a sweet flavor. Sweeteners include added materials as well as those sweeteners that are naturally present as in fruit juices. Examples of sweeteners include sugars which are mono and di-saccharide carbohydrates, artificial sweeteners, sugar alcohols, and other naturally sweet compounds. The sweetener that can be used is any natural or artificial sweetener whether used alone or in combination. The amount of sweetener used will vary depending upon the type of sweetener and the desired level of sweetness in the final beverage ; with the concentration of the sweeteners in a serving is usually in the range of from about 10% to about 80% by weight.

Typically, the natural sweeteners will be used in an amount of about 50% to about 70% by weight of the powder. The preferred natural sweeteners include saccharides such as saccharose, glucose, fructose, sucrose, lactose, maltose, dextrose or maltodextrin; or sugar alcohols such as sorbitol or xylitose. Artificial sweeteners such as saccharin, cyclamates, actosulfame, L-aspartyl based sweeteners such as aspartame, and the like, and mixtures thereof can instead be used. When an artificial sweetener is sued, it may be combined with bulking agents such as maltodextrin and/or polydextrose; particularly if an artificial sweetener is used. In this case, to total concentration of sweetener and bulking agent in a serving is usually in the range of from about 10% to about 25% w/w; artificial sweetener itself usually comprises less than 1% by weight. For a sweeter variety of a serving according to the invention, a more sweet type of oligofructose may also be selected. An oligofructose with up to 45% mono- and disaccharides is particular suitable for this purpose.

Another way of measuring the amount of sweetener to use is to base it upon the sweetness compared to sucrose. Mixtures of low calorie or artificial sweeteners sugars can also be used in the present invention, i.e., a mixture of aspartame and sucrose or high fructose corn syrup can be used. This provides a reduced calorie beverage.

The serving according to the invention may also comprise other organoleptic agents such as aromas and flavors. The serving preferably contains about 0.05 to about 0.2% by weight of coffee aroma components for enhanced flavor. Typical coffee flavors include spice, orange, chocolate, toffee, mocha, cream, vanilla, hazlenut, and other flavors. Tea flavors include lemon, apple, orange, cinnamon, spice, mint, rose, hibiscus, chamomile and the like. The selected flavor can be as desired based on the taste preferences of the product formulator or consumer.

The particular amount of the flavor component effective for imparting flavor characteristics to the beverages of the present invention will depend upon the desired final flavor. The flavor component can generally comprise at least 0.05% by weight of the beverage composition and typically from 0.1% to about 2% by weight of the beverage (on a single strength basis).

The serving normally comprises one or more flavonols selected from the group consisting of catechins, epicatechins, gallocatechins, epigallocatechins, epichatechins gallates, epigallocatechin gallate or their derivatives. These derivatives include sugar salts, sugar esters, and other edible physiologically available derivatives. Green tea solids contain these catechins. It has been found that the content of flavonols should be balanced with the content of caffeine in order to obtain a suitable serving. It is believed that this may have a stabilising effect on plasma caffeine level. The weight ratio between the caffeine and the flavonol content is from 1:0.2 to 1:1 and preferably is about 1:0.4.

These flavanols are obtained by the extraction of plants, e.g. green tea and related plants. Plants containing catechins are known to those skilled in the art. The flavanols can be extracted from either a single plant or mixtures of plants. Examples of the most common flavanols which are obtained from extraction from the tea plants and other members of the catechu gambir or (Uncaria family) are those mentioned above. Any mixture of two or more of the flavanols can be used in the process of this invention. Catechin is preferably used in combination with one of the other flavanols mentioned above. The flavanols can be extracted from green tea or other natural source by any suitable method well known to those skilled in the art. For example, extraction with ethyl acetate or chlorinated solvents is one way to isolate flavanols or catechins; or, they may be prepared by synthetic or other appropriate chemical methods. Also, flavanols such as catechin, epicatechin, and their derivatives are commercially available.

These flavanols are natural substances present in a variety of plants including green teas and herb teas. For a completely natural drink, green tea solids and green tea catechins are preferred. Green tea includes materials obtained from the tea plant Camellia sinensis, for instance, freshly gathered tea leaves, fresh green tea leaves that are dried immediately after gathering, fresh green tea leaves that have been heat treated before drying to inactivate any enzymes present, and aqueous extracts of these leaves. Green tea materials are tea leaves and their extracts which have not undergone substantial fermentation to create black tea.

The amount of catechins or flavanols in the beverage can vary. However, at least about 0.05% is used and from about 0.1% to about 3% is preferred. Flavanols can add a bitter taste to foods and beverages. This is particularly notable in beverages which are not ordinarily astringent or bitter. This bitter taste can be modified by adding polysaccharides including cellulose, pectin, and various gums to the beverage. These materials form a reversible complex with the flavanols and mask the bitterness, but release the flavanols in the stomach or intestines for absorption. Nucleotides and nucleic acids, as well as other alkaloids can also be used to control the bitterness.

The one or more vitamins are preferably selected from the group comprising vitamin B1, vitamin B2, vitamin B5, vitamin B6, vitamin B12, vitamin C, vitamin PP and biotin. Also, the serving preferably contains one or more minerals including magnesium, calcium, sodium, potassium and/or iron. This may be particular desirable since the beverage serving may provide both stimulation and energy activation.

In addition, the beverage powder may contain one or more beverage acceptable additives including stabilizers, colorants, taste-masking agents, pH adjusting agents, viscosity adjusting agents, solubilizers, preservatives etc. These additives can be used in a conventional amount of between about 0.01 and 5 percent by weight, and preferably between about 0.1 and 1.5 percent by weight of the beverage.

If desired, the whitener, sweetener, flavor, vitamins, minerals, are packaged in a sachet that is separated from the sachet that contains the caffeine providing components, so that the consumer has the option of forming a black coffee beverage or not.

When whitened or sweetened beverages are desired, all components can be mixed together with the resulting powder provided in a single serving sachet. As certain consumers prefer to drink coffee "black," it is convenient to separately package the whitener, sweetener, flavor, and other additives in a separate compartment of the sachet or in a separate sachet or in another sachet that is connected or otherwise associated with the coffee sachet. This allows a black coffee to be obtained from the contents of the coffee sachet, while a whitened and sweetened drink can be made by using the contents of both sachets. In another, more preferred embodiment, the complete single serving whitened, sweetened and flavored coffee beverage powder can be provided in a single sachet for convenience. Thus, all the consumer needs to do is add the sachet contents into a cup or other container with the addition of an appropriate amount of fluid, such as hot water, with mixing to form the beverage.

In yet another embodiment, the single serving can be provided in multiple compartment sachets or in multiple sachets so that, e.g., the beverage can be formed in steps. This is also useful for allowing the consumer to prepare a beverage with a lower amount of caffeine for situations when desired, such as when consuming a beverage in the evening before retiring to sleep. The amounts of caffeine can be indicated on each sachet compartment so that a controlled, accurate amount can be provided in the beverage. While this is a lesser preferred embodiment, it still enables the consumer to prepare a beverage with a precisely known amount of caffeine.

In specific embodiments of the invention, a serving comprises from about 10% to about 20% w/w coffee solids and from about 0.1% to about 5% w/w decaffeinated coffee solids. Furthermore, a serving may comprise from about 0.5% to about 5% w/w decaffeinated tea extract from about 10% to about 30% w/w coffee whitener and/or from about 50% to about 70% w/w sugar, such as sucrose and fructose. Moreover, a serving may comprise from about 0.01% to about 5% w/w vitamins, from about 0.01% to about 5% w/w guarana extract, from about 0.01% to about 5% w/w flavor and/or from about 0.01% to about 5% w/w minerals.

A serving according to invention normally contains an amount of coffee beverage powder that is suitable for making a cup of coffee upon addition of a suitable liquid. Thus, a serving normally contains from about 10 to about 30 g of high-caffeinated soluble coffee beverage powder and the powder is soluble in hot or cold liquid such as water. The serving according to the invention further has the advantage that it gives a pleasant beverage upon re-constitution in cold water. This is particular beneficial as coffee beverages tend to have an emphasized bitterness when in cold form.

### Examples

The following examples further illustrate the invention without limiting it in any way.

### Example 1

### Preparation of a serving of a high-caffeinated soluble coffee beverage powder:

A sample of a serving according to the invention is prepared with the following ingredients that are dry mixed.

| | |
|---|---|
| Base creamer non-fat | 20-25% w/w |
| Sucrose | 55-65% w/w |
| Coffee instant | 10-15% w/w |
| Tea extract decaffeinated | 1-5% w/w |
| Coffee instant decaffeinated | 1-5% w/w |
| Magnesium hydroxide carbonate | 0.1-1.0% w/w |
| Vitamins | 0.05-0.3% w/w |
| Guarana dry extract | 0.05-0.3% w/w |
| Flavor or mixture of flavors | 0.05-0.3% w/w |

The powder is obtained by mixing the individual ingredients until it is homogeneous.

### Example 2

### Preparation of a coffee beverage from a serving according to the invention

One serving of powder according to the invention as prepared in Example 1 is dissolved in about 200 ml of hot water having a temperature of 95°C. The beverage is then ready to be consumed.

A trained test panel tested the coffee beverage and found that it has a coffee taste without any undesired bitterness.

### Example 3

The lasting stimulating effect of caffeine upon consumption of a coffee beverage from a serving according to the invention. 24 healthy non-smoking male volunteers were asked to consume one of the following beverages

### (a) Controlled delivery system of the invention:

| Component | Amount |
|---|---|
| sucrose | 60 |
| whitener | 34 |
| instant coffee | 14 |
| vitamin mixture | 0.2 |
| minerals | 0.8 |
| decaffeinated black tea | 1 |
| guarana extract | 0.1 |
| flavors | 0.2 |
| total parts | 20 g. |
| | |
| reconstitution water | 200 ml. |
| caffeine content | 100 mg |

### (b) The prior art:

NESCAFÉ Gold™ de Luxe: 1.9 g in 100 ml of hot water containing ca. 61 mg caffeine.
The beverages were not identified to the consumers.

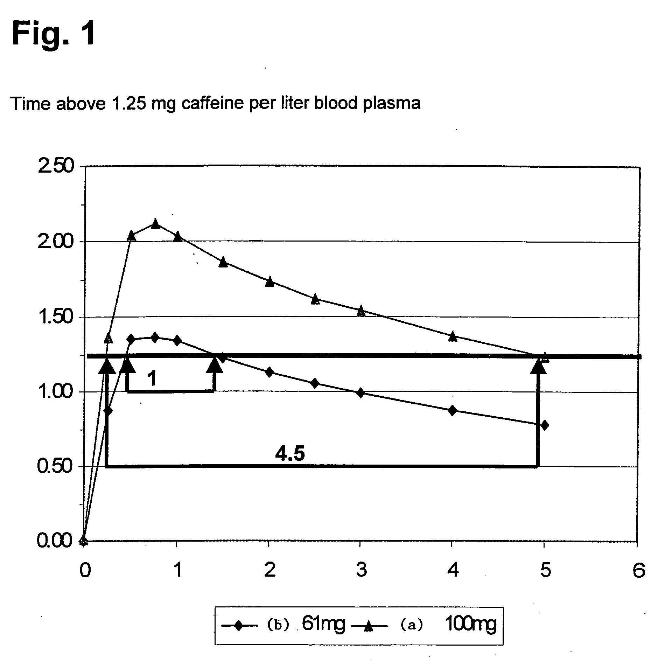

Blood collection occurred periodically from each consumer for a 5 hour period after consuming the beverage. Caffeine was extracted from plasma and measured by high pressure liquid chromatography) and UV detection. The results are shown in Figure 1.

As shown, the inventive beverage provides a plasma level of at least 1.25 mg for 4.5 hours, compared to only 1 hour for the prior art beverage. In addition, the subjects mentioned that they felt mentally alert during the period, and without any side effects.

## Claims

**1.** A controlled caffeine delivery system in a single serving sachet made of a rupturable material, **characterized in that** the sachet provides a high-caffeinated soluble coffee beverage powder comprising,
(a) conventional caffeine-containing coffee solids, and
(b) additional caffeine containing solids from a natural source other than (a) in an amount sufficient to improve palatability if a beverage prepared by adding water to the powder, wherein the beverage contains at least 80 to no more than 115 mg caffeine such that consumption of a single serving of the beverage by a person provides a plasma caffeine level in the person that is above 1.25 mg/l for at least 2 to 4 hours following consumption of the beverage.

**2.** The system of claim 1, **characterized in that** the beverage contains 80 to 110 mg caffeine, and preferably 85 to 100 mg caffeine.

**3.** The system of claim 1 or 2, wherein the sachet contains between 5 and 30 mg of powder and a single serving of a beverage that has an acceptable taste is prepared by combining between 150 and 250 ml water with the sachet contents.

**4.** The system of any preceding claim, comprising from about 10% to about 50% w/w of conventional coffee solids and about 0.01 to about 10% w/w of one or more additional caffeine containing solids from a natural source other than conventional coffee solids.

**5.** The system of any preceding claim **characterized in that** the additional caffeine containing solids are tea extracts, guarana extracts, decaffeinated tea extracts or decaffeinated coffee extracts.

**6.** The system of any preceding claim **characterized in that** one or more flavanols are included, with the flavanols and caffeine being present in a weight ratio of 1:0.02 to 1:1.

**7.** The system of any preceding claim **characterized in that** one or more of aromas, flavors, vitamins or minerals are present in the beverage powder.

**8.** The system of any preceding claim **characterized in that** a vitamin premix is included to provide further energy to the consumer of the beverage.

**9.** The system of any preceding claim **characterized in that** one or more of a sweetener, a whitener, or a flavor is present in the beverage powder.

**10.** The system of any preceding claim **characterized in that** the powder ingredients are present in the sachet in a homogeneously mixed condition.

**11.** The system of any preceding claim, wherein the conventional caffeine-containing coffee solids are present in an amount of from about 10% to about 30% by weight, the additional caffeine containing solids are present in an amount of from about 0.1% to about 5% by weight and include decaffeinated coffee solids, decaffeinated tea extracts, or a mixture thereof, and the powder further contains from about 10% to about 30% by weight of a coffee whitener, from about 50% to about 70% by weight of a sweetener, and optionally, one or more of coffee aroma, a flavor, vitamins, minerals, guarana extract or a flavanol, each, when present, in an amount of from about 0.01% to about 5%.

**12.** The system of claim 11 **characterized in that** the components c), d), and e) are packaged in a sachet that is separated from the sachet that contains components a) and b), so that the consumer has the option of forming a black coffee beverage or not.

**13.** The system of any preceding claim **characterized in that** the single serving is packaged in multiple sachets that each contain a portion of the serving with each sachet containing a known amount of caffeine.

**13.** The system of any preceding claim **characterized in that** the multiple sachets are packaged in a larger container for sequential formation of beverages over time.

**14.** The system of any preceding claim **characterized in that** the beverage is prepared by the addition of 150 to 250 ml of a liquid to the powder.

**15.** The system of any preceding claim **characterized in that** the liquid comprises water or milk.

**16.** Use of the sachet of claim 1 to deliver a controlled amount of caffeine to a person in need of or desirous of receiving same by forming a beverage from the contents of the sachet and a liquid, followed by consumption of the liquid by the person.

**17.** Use of the sachet of claim 1 to prepare a beverage that can deliver a controlled amount of caffeine to a person in need of or desirous of receiving same wherein the person obtains the caffeine amounts by consuming the beverage that is prepared by mixing the contents of the sachet and a liquid.
